# FASCICULE DE BREVET EUROPEEN

(11) **EP 0 793 596 B1**
(45) Date de publication et mention de la délivrance du brevet: **18.04.2001**
(21) Numéro de dépôt: 95928530.5
(22) Date de dépôt: 23.08.1995
(51) Int. Cl.: B62J 1/08, B62J 1/04

(54) **SELLE ERGONOMIQUE DE BICYCLETTE**
ERGONOMISCHER SITZ FÜR FAHRRAD
ERGONOMIC BICYCLE SADDLE

(30) Priorité: 23.08.1994 FR 9410354
(43) Date de publication de la demande: 10.09.1997
(73) Titulaire: Proust, Daniel, 56870 Baden (FR)
(72) Inventeur: Proust, Daniel, 56870 Baden (FR)
(86) Numéro de dépôt international: FR9501104
(87) Numéro de publication internationale: WO9605998

(56) Documents cités:
- EP-A- 0 467 541
- DE-C- 99 557
- DE-C- 738 672
- GB-A- 2 093 779
- US-A- 4 877 286

## Description

La présente invention concerne une selle ergonomique de bicyclette.

Elle est particulièrement adaptée aux personnes qui utilisent de manière intensive une bicyclette, en particulier les sportifs pratiquant la compétition.

Dans sa forme, la selle traditionnelle a peu évolué depuis l'invention de la bicyclette.

L'avant de la selle, communément appelé "bec de selle", comprime par strictions les parties génitales, frotte et irrite l'intérieur des cuisses dans le mouvement de pédalage.

La selle provoque le plus souvent des lésions cutanées par irritations. Elle favorise ou peut entraîner des contusions du périnée et des douleurs par strictions de l'appareil génito-urinaire, surtout en cas d'effort prolongé, notamment en compétition.

Le bec de selle provoque aussi, du fait de ces frottements inconfortables, une tendance à modifier le mouvement de pédalage en rotation externe (genoux en dehors), ce qui lui fait perdre ainsi une partie de son efficacité bio-mécanique au détriment de l'ensemble du système articulaire, musculaire, ligamentaire et tendineux.

D'autre part, le déhanchement du corps du fait de la fixité de la selle traditionnelle, provoque des frottements, des pressions au niveau de l'insertion des muscles postérieurs de la cuisse et des compressions entre les ischions (point d'appuis fessiers), pouvant se transformer en induration, bien connue des cyclistes et des médecins du sport.

Ce problème se pose pour les personnes dont une jambe est plus courte que l'autre. Ils doivent se déhancher périodiquement pour que le pied de la jambe la plus courte prenne un appui correct sur la pédale correspondante.

Le document EP-A-0 467 541 décrit une selle de bicyclette qui est montée articulée autour de l'axe du tube de celle-ci. Ce type de montage articulé permet de pallier les inconvénients précités liés à la fixité de la selle traditionnelle. Par contre, il ne résout aucunement ceux liés à la présence du bec de selle.

La présente invention a pour but de proposer une selle qui permet d'apporter une solution à ces deux séries d'inconvénients différents.

Elle vise à atteindre ces objectifs à l'aide de moyens simples et peu onéreux.

Il s'agit d'une selle qui est montée pivotante sur un tube de selle, autour de l'axe de celui-ci.

Une selle selon l'invention est définie par la revendication 1.

L'absence de "bec de selle" permet au cycliste de réaliser des mouvements plus amples et supprime la majorité des frottements et des compressions, le corps étant en appui simplement sur la selle au niveau des ischions.

De manière surprenante, le déséquilibre qui résulterait normalement de l'absence du bec de selle est compensé par le mouvement de pivotement autour de l'axe du tube de selle. Le cycliste est dans une position de pédalage, proche de celle du coureur à pied.

En quelque sorte, la selle est asservie à la "mécanique" humaine.

De plus, le mouvement de pivotement de la selle autour du tube de selle permet aux personnes dont une jambe est plus courte que l'autre, de prendre un appui correct sur les pédales sans avoir à se déhancher.

Selon d'autres caractéristiques avantageuses et non limitatives de cette selle :
- elle est pourvue de moyens aptes à limiter en amplitude le pivotement de la selle par rapport à l'axe du tube de selle ;
- elle est solidaire d'une pièce de montage, notamment un tube, pénétrant à l'intérieur du tube de selle ;
- elle est solidaire d'un tube de montage emmanché sur le tube de selle ;
- l'un desdits tubes est pourvu d'un axe formant butée et traversant une lumière ménagée dans l'autre tube ;
- elle est pourvue de moyens opposant une résistance au mouvement de pivotement ;
- elle est en outre montée pivotante autour d'un axe horizontal, perpendiculaire à l'axe du tube de selle ;
- elle comporte des moyens aptes à amortir son mouvement de pivotement autour dudit axe horizontal ;
- elle comporte au moins un roulement à billes réalisant le guidage desdits tubes en rotation ;
- l'axe du tube de selle est incliné au plus de 30° par rapport à la verticale.

D'autres caractéristiques et avantages de l'invention apparaîtront à la lecture de la description détaillée qui va suivre de certains modes de réalisation préférentiels. Cette description sera faite en référence aux dessins annexés dans lesquels :
- la figure 1 est une vue simplifiée, en coupe verticale d'une selle conforme à l'invention, en place sur un tube de selle ;
- la figure 2 est une vue en coupe du tube de selle, selon la ligne II-II de la figure 1 ;
- la figure 3 est une vue en coupe verticale d'une forme préférée de réalisation de la selle, en place sur un tube de selle.

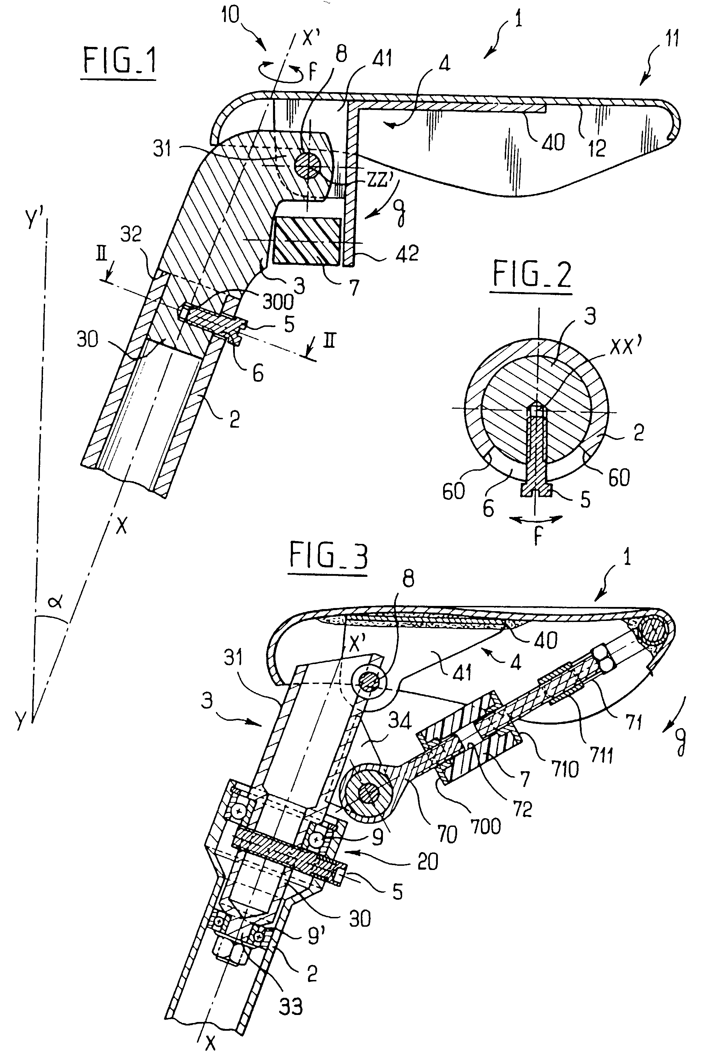

La figure 1 représente en coupe verticale une vue simplifiée de la selle conforme à l'invention, destinée simplement à en expliquer la structure et le fonctionnement.

Cette selle est en place sur un tube de selle 2 de type classique, qui équipe une bicyclette non représentée.

L'axe du tube 2 est désigné **XX'**, tandis que l'axe **YY'** désigne la verticale. De préférence, ces axes forment entre eux un angle a inférieur ou égal à 30°. Encore plus préférentiellement, cet angle est compris entre 20 et 30°.

Il s'agit d'un tube métallique ouvert à son extrémité supérieure. Dans cette extrémité est engagée la partie inférieure cylindrique 30 d'une pièce de montage 3 de la selle 1.

Cette pièce 3 est pleine et de forme allongée. Dans une autre forme de réalisation, il pourrait s'agir d'une pièce tubulaire. Elle s'étend dans le prolongement du tube 2. Elle comporte une partie d'extrémité supérieure 31 formant un coude par rapport au reste de la pièce.

Dans sa partie inférieure 30, la pièce 3 comporte un trou radial taraudé 300. Le tube 2 est quant à lui pourvu, en regard dudit trou, d'une lumière 60 qui s'étend, en arc de cercle, sur une partie de la circonférence du tube 2.

A travers la lumière est engagée une vis 5 qui coopère avec le trou taraudé 6.

De cette manière, on peut faire pivoter la pièce 3 par rapport à l'axe **XX'** du tube 2 tout en limitant l'amplitude de ce mouvement (flèches **f**, figures 1 et 2). En effet, le déplacement de la pièce 3 est limité par la vis 5 venant en butée contre les bords opposés 60 de la lumière 6.

Il peut être prévu des moyens opposant une résistance au mouvement de pivotement. Il s'agit par exemple de moyens de rappel en position médiane, tels que des ressorts.

La selle 1 est par exemple réalisée par moulage de polyester.

Ses parties antérieure et postérieure sont répertoriées 10 et 11.

Elle est fixée par sa face inférieure à l'aile horizontale 40 d'une cornière 4. Les moyens de fixation sont par exemple de la colle.

La cornière 4 comporte une seconde aile 42 qui s'étend à 90° vers le bas par rapport à l'aile horizontale 40.

La face de l'aile 42 opposée à l'aile 40 est pourvue de deux plaquettes parallèles 41 qui s'étendent verticalement. Une seule est visible à la figure 1.

Ces plaquettes sont traversées par un arbre 8 qui traverse également la pièce 3, dans sa partie d'extrémité supérieure 31.

Les plaquettes 41 forment avec l'aile 42 de la cornière 4, une sorte de chape d'articulation de la selle 1 sur la pièce 3.

L'arbre 8, d'axe **ZZ'**, est guidé de manière adéquate dans les éléments 41 et 31 et s'étend horizontalement, c'est-à-dire perpendiculairement à l'axe **XX'.**

Des moyens amortisseurs 7, constitués d'un tampon élastique, sont intercalés entre l'aile 42 de la cornière et la pièce 3. Ils ont pour but d'amortir le mouvement de pivotement de la selle par rapport à l'axe **ZZ'**. Pour faciliter la lecture de la figure, les moyens de fixation du tampon à la selle n' ont pas été représentés.

On comprend aisément à la lecture de la figure 1 que le montage pivotant de la selle par rapport au tube 2 est situé au niveau de sa partie antérieure 10 de sorte que celle-ci est dépourvue du bec de selle traditionnel, c'est-à-dire qu'elle ne présente pas, ou pratiquement pas de débord vers l'avant du tube de selle.

A la figure 3 est représenté un mode de réalisation préféré de la selle de l'invention. Sur cette figure, les éléments identiques ou similaires à ceux de la figure 1 portent des références identiques.

Le tube de selle 2 comporte une partie d'extrémité supérieure 20 de diamètre supérieur au reste du tube. La zone de transition entre ces deux parties a une forme tronconique.

La pièce de montage 3 de la selle 1 est formée d'un tube et présente une partie d'extrémité supérieure 31 qui s'étend en dehors et dans le prolongement du tube 2.

Elle comporte également un tronçon intermédiaire 30, de plus petit diamètre qui s'étend jusque dans la zone du tube 2 présentant un diamètre réduit.

Elle est pourvue enfin d'une partie d'extrémité inférieure 33, de diamètre encore plus petit.

Le guidage en rotation du tube 3 par rapport au tube 2 est réalisé au moyen de deux roulements à billes 9 et 9' lesquels sont montés, respectivement au niveau des tronçons 30 et 33 du tube 3.

Comme dans le mode de réalisation de la figure 1, une vis 5 traverse une lumière 6 formée dans le tube 2, ainsi que le tronçon 30 du tube 3. Ainsi, la selle peut pivoter autour de l'axe **XX'** du tube de selle.

La selle 1 est fixée sur une chape 4, au niveau de sa base horizontale 41. La chape comporte deux joues latérales et parallèles 41 (une seule est visible à la figure 3) qui s'étendent verticalement de part et d'autre de l'extrémité supérieure du tube 3.

La chape est articulée à ce niveau sur le tube 3 au moyen d'un petit arbre 8 disposé horizontalement.

Sur l'arrière du tube 3, au niveau de sa partie 31, sont soudées deux plaquettes parallèles 34 sur lesquelles est articulée une biellette 70.

Sur son extrémité libre est engagée une rondelle 700.

De la même manière, une seconde biellette 71 est articulée sur la selle, au niveau de son extrémité postérieure.

Elle comporte elle aussi une rondelle 710 montée non loin de son extrémité libre.

Cette seconde biellette est en fait formée de deux tronçons différents dont la longueur totale est réglable au moyen d'un petit fourreau moleté 711.

Les extrémités libres des deux biellettes sont distantes d'un petit intervalle libre et entre les rondelles 700 et 710 est intercalé un tampon élastique cylindrique 7. Il présente une ouverture axiale 72 permettant de l'emmancher sur les extrémités libres des deux biellettes.

La déformation de la selle dans le sens de la flèche **g** par pivotement autour de l'arbre 8 est encaissée par le tampon élastique 7 qui s'écrase.

De plus, l'inclinaison de la selle par rapport à l'horizontale peut être réglée au moyen du fourreau moleté 711.

Bien entendu, la selle peut recevoir tous les aménagements possibles pour améliorer son confort et sa légèreté, suivant l'utilisation que l'on souhaite faire de la bicyclette (tourisme, cross, compétition).

La largeur de la selle peut être choisie en fonction de l'individu et, en particulier, de sa largeur de bassin.

Ainsi que cela a été évoqué plus haut, l'absence de bec de selle permet au cycliste de réaliser des mouvements plus amples et supprime la majorité des frottements et compressions.

Le mouvement de pivotement alternatif de la selle résultant du pédalage permet de rendre mobile la région vertébrale lombo-sacrée du cycliste. Celle-ci n'est plus fixe, comme sur les selles traditionnelles, ce qui réduit les risques de lombalgies d'efforts liés aux activités prolongées et répétitives.

Par ailleurs, la selle de l'invention procure les avantages suivants :
- appui du corps sur la selle uniquement par les ischions, d'où suppression de nombreux frottements et compressions ;
- suppression du "boitement" dû à une jambe plus courte que l'autre ;
- meilleure oxygénation des muscles en phases d'étirement ;
- circulation du sang plus facile ;
- plus de puissance dans le pédalage, le poids du corps se déplace plus facilement d'un côté et de l'autre ;
- appui équilibré des articulations (condyles, plateau tibial) ;
- la jambe "tombe" à l'aplomb de la pédale (pas de contraction ligamentaire) ;
- mouvements similaires à ceux du coureur à pieds (pas de contraintes au niveau de l'entre-cuisses).

## Revendications

1. Selle ergonomique de bicyclette, montée pivotante sur un tube (2) de selle, autour de l'axe (XX') de celui-ci, et dépourvue de bec de selle, caractérisé en ce que le montage pivotant est situé au niveau de sa partie antérieure, de sorte qu'elle ne présente pas de débord vers l'avant du tube (2) de selle et en ce qu'elle est agencée pour que l'appui du corps du cycliste se fasse uniquement par les ischions.

2. Selle selon la revendication 1, caractérisée en ce qu'elle est pourvue de moyens (5,6) aptes à limiter en amplitude le pivotement de la selle (1) par rapport à l'axe (XX') du tube (2) de selle.

3. Selle selon la revendication 1 ou 2, caractérisée en ce qu'elle est solidaire d'une pièce de montage, notamment un tube (3), pénétrant à l'intérieur du tube (2) de selle.

4. Selle selon la revendication 2, caractérisée en ce qu'elle est solidaire d'un tube (3) de montage emmanché sur le tube (2) de selle.

5. Selle selon la revendication 3 ou 4, quand elles sont dépendantes de la revendication 2, caractérisée en ce que l'un desdits tubes (2,3) est pourvu d'un axe (5) formant butée et traversant une lumière (6) ménagée dans l'autre tube (3,2).

6. Selle selon l'une des revendications 1 à 5, caractérisée en ce qu'elle est pourvue de moyens opposant une résistance au mouvement de pivotement.

7. Selle selon l'une des revendications 1 à 6, caractérisée en ce qu'elle est en outre montée pivotante verticalement autour d'un axe (ZZ') horizontal, perpendiculaire à l'axe (XX') du tube (2) de selle.

8. Selle selon la revendication 7, caractérisée en ce qu'elle comporte des moyens (7) aptes à amortir son mouvement de pivotement autour dudit axe horizontal (ZZ') et/ou pour encaisser la déformation de la selle autour dudit axe horizontal.

9. Selle selon l'une des revendications 3 à 8, caractérisée en ce qu'elle comporte au moins un roulement à billes (9,9') ou une bague de frottement réalisant le guidage desdits tubes en rotation.

10. Selle selon l'une des revendications 1 à 9, caractérisée en ce que l'axe (XX') du tube (2) de selle est incliné au plus de 30° par rapport à la verticale et/ou elle ce qu'elle comporte des moyens de réglage (71, 711) de son inclinaison.

## Claims

1. Ergonomic bicycle saddle, mounted onto the saddle post (2), so as to swivel around the longitudinal axis (XX') of said post, said saddle having no saddle nose, characterized in that said swivel mounting is located at the front end portion of the saddle, so that no portion of the saddle extends forward of the saddle post (2) and in that said saddle is constituted so as to support the rider's body only by the rider's ischiums.

2. Saddle according to claim 1, characterized in that it comprises means (5, 6) to limit the amplitude of the swivel movement of the saddle (1) in relation to the longitudinal axis (XX') of the saddle post (2).

3. Saddle according to claim 1 or 2, characterized in that it is firmly attached to a mounting element, namely a tube (3), fitted to the interior of the saddle post(2).

4. Saddle according to claim 2, characterized in that it is firmly attached to a mounting tube (3), clamped onto the saddle post (2).

5. Saddle according to claim 3 or 4, when both are depending on claim 2, characterized in that one of the components (the saddle post (2) or the mounting tube (3)) is fitted with an axis (5) forming a stop and cooperating with an opening (6) bored in the other component (the mounting tube (3) or the saddle post (2)).

6. Saddle according to any one of the claims 1 to 5, characterized in that it comprises means for resisting to the swivel movement.

7. Saddle according to any one of the claims 1 to 6, characterized in that it further comprises means for allowing said saddle to swivel vertically, around an horizontal axis (ZZ'), which is perpendicular to the axis (XX') of the saddle post (2).

8. Saddle according to claim 7, characterized in that it comprises means (7) for cushioning its swiveling movement around said horizontal axis (ZZ') and/or for supporting the deformation of the saddle around said horizontal axis.

9. Saddle according to any one of claims 3 to 8, characterized in that it comprises at least one ball bearing (9, 9') or a ring to rotationally guide the post and/or tube.

10. Saddle according to any one of claims 1 to 9, characterized in that the axis (XX') of the saddle post (2) is inclined at most by 30° to the vertical and/or it comprises means (71, 711) for setting its inclination.

## Patentansprüche

1. Ergonomischer Fahrrad-Sattel, der ist auf einen Sattel-Pfahl (2) eingerichtet, damit als um die längen Achse (XX') von gesagt Pfahl zu drehen, und der keine Sattel-Nase hat, dadurch gekennzeichnet daß, die drehende Einrichtung ist beim Front-Ende-Teil des Sattels gefunden, damit kein Teil des Sattel sich vorwärts vom Sattel-Pfahl (2) ausstreckt, und daß, das Sattel gebildet ist, damit als den Körper des Reiters nur durch Ischiums des Reiters zu unterstützen.

2. Sattel nach Anspruch 1, dadurch gekennzeichnet daß, es Mitteln (5, 6) umfaßt, die Amplitude der drehender Bewegung des Sattels (1) in Verbindung zur längen Asche (XX') von sattel-Pfahl (2) zu begrenzen.

3. Sattel nach Anspruch 1 oder 2, dadurch gekennzeichnet daß, es fest an einem Einbau Bestandteil befestigt ist, nämlich ein Rohr (3) die in Innere des Sattel-Pfahl (2) befestigt ist.

4. Sattel nach Anspruch 2, dadurch gekennzeichnet daß, es fest an einem Einbau-Rohr (3) befestigt ist, klemmte auf den Sattel-Pfahl (2) fest.

5. Sattel nach Anspruch 3 oder 4, wenn beide von Ansprüche 2 abhängen, dadurch gekennzeichnet daß, ein Bestandteil (Sattel-Pfahl (2) oder Einbau-Rohr (3)) eine Achse (5) besitz, die eine Stutze macht, und die mit einer Offnung (6) bohrend in dem anderen Bestandteil (Einbau-Rohr (3) oder Sattel-Pfahl (2)) kooperiert.

6. Sattel nach Anspruch 1 bis 5, dadurch gekennzeichnet daß, es Mitteln umfaßt, zu widerstehen der drehender Bewegung.

7. Sattel nach Anspruch 1 bis 6, dadurch gekennzeichnet daß, es weiter Mitteln für das Erlauben von gesagt Sattel zum drehen senkvertikalig umfaßt, um eine horizontal Achse (ZZ') das zur Achse (XX') vom Sattel-Pfahl(2) senkrecht ist.

8. Sattel nach Anspruch 7, dadurch gekennzeichnet daß, es Mitteln (7) umfaßt, die drehende Bewegung um gesagt horizontal Achse (ZZ') zu dämpfen und/oder die Deformierung des Sattels um gesagt horizontal Achse zu unterstutzen.

9. Sattel nach Anspruch 7, dadurch gekennzeichnet daß, es wenigstens ein Ball Rollen (9, 9') oder ein Reibung Ring umfaßt für der rotierender Führung der Pfahl und/oder der Rohr.

10. Sattel nach Anspruch 1 bis 9, dadurch gekennzeichnet daß, die Achse (XX') vom Sattel-Pfahl (2) ist bei das meisten von 30° das Senkvertikal abschüssig und/oder es umfaßt Mitteln (71, 711) fur das Setzen seiner Neigung.
